## Europäisches Patentamt
## European Patent Office
## Office européen des brevets

(19)

(11) Veröffentlichungsnummer : **0 144 457**
**B1**

(12) **EUROPÄISCHE PATENTSCHRIFT**

(45) Veröffentlichungstag der Patentschrift :
11.11.87

(51) Int. Cl.⁴ : **H 04 N   7/08**

(21) Anmeldenummer : 83112294.0

(22) Anmeldetag : 07.12.83

(54) Daten-Slicer-Schaltung zur Abtrennung und Wiedergewinnung von digitalen Teletextsignalen.

(43) Veröffentlichungstag der Anmeldung :
**19.06.85 Patentblatt 85/25**

(45) Bekanntmachung des Hinweises auf die Patenterteilung : **11.11.87 Patentblatt 87/46**

(84) Benannte Vertragsstaaten :
**DE FR NL**

(56) Entgegenhaltungen :
**GB-A- 2 006 570**
**GB-A- 2 063 627**
**US-A- 4 115 811**
**US-A- 4 318 127**
**US-A- 4 318 128**

(73) Patentinhaber : **Deutsche ITT Industries GmbH**
**Hans-Bunte-Strasse 19 Postfach 840**
**D-7800 Freiburg (DE)**
**DE**
**ITT INDUSTRIES INC.**
**320 Park Avenue**
**New York, NY 10022 (US)**
**FR NL**

(72) Erfinder : **Langenkamp, Ulrich, Dipl.-Ing.**
**Jacobistrasse 15**
**D-7800 Freiburg i. Br. (DE)**

(74) Vertreter : **Morstadt, Volker, Dipl.-Ing. et al**
**c/o Deutsche ITT Industries GmbH Patent/Lizenzabteilung Postfach 840 Hans-Bunte-Strasse 19**
**D-7800 Freiburg/Brsg. (DE)**

## Beschreibung

Die Erfindung betrifft eine Daten-Slicer-Schaltung zur Abtrennung und Wiedergewinnung von digitalen Teletextsignalen aus dem in Farbfernsehempfängern demodulierten FBAS-Signal mittels eines aus den Teletextsignalen abgeleiteten Schwellwerts unter Verwendung eines Fangcode-Detektors und eines Auftastimpulses, dessen aktive Phase mindestens während der Dauer von Horizontal- und Farbsynchronimpulsen auftritt. Die Notwendigkeit einer derartigen Daten-Slicer-Schaltung ist in der Zeitschrift « Funkschau », 1977, Band 49, Heft 18, Seiten 820 bis 824 und Heft 19, 882 bis 887 im Rahmen eines Aufsatzes über « Die Grundlagen von Teletext und Viewdata », insbesondere Seite 882, rechte Spalte, bis Seite 884 in Verbindung mit den Bildern 15 und 16, angegeben. Die in Bild 16 als dynamischer Daten-Slicer angegebene Schaltung besteht im wesentlichen aus einer die Spitzen- und Talwerte des Datenstroms gleichrichtenden und speichernden Anordnung. In Bild 16 ist hierzu eine mit Dioden, Widerständen und Kondensatoren aufgebaute Spitzengleichrichterschaltung gezeigt. Das Bild 17 auf Seite 884 zeigt verschiedene Signalformen, wie sie bei der in Europa üblichen Teletextnorm auftreten. Es ist ersichtlich, daß die Teletextsignale zeitlich gesehen hinter dem Farbburst liegen und zunächst ein Takteinlauf-Signal (Clock run-in) und nachfolgend ein Fangcode-Signal (framing code) auftritt, das dann von den eigentlichen Teletextdatensignalen gefolgt ist. Bild 17 zeigt ferner, daß während der aktiven Phase von Horizontal-, Vertikal- und Farbsynchronimpulsen (Farbburst) ein Auftastsignal, dort mit Q1 bezeichnet, von der Schaltung erzeugt wird.

Die Erfindung geht von diesem mehr allgemeinen Fachwissen aus und hat sich die Aufgabe gestellt, in einem Fernsehempfänger mit digitaler Signalverarbeitung eine Daten-Slicer-Schaltung zu schaffen, die vollständig nach digitalen Schaltprinzipien arbeitet, d. h. die das bereits in digitaler Form vorliegende FBAS-Signal digital weiterverarbeitet. Die digitale Signalverarbeitung und -aufbereitung in Fernsehempfängern ist aus der Zeitschrift « Electronics », 11. August 1981, Seiten 97 bis 108 an sich bekannt.

Ein Hauptvorteil der Erfindung liegt bereits in der Lösung der Aufgabe. Ein weiterer Vorteil ist darin zu sehen, daß der Schwellwert, der dem digitalen FBAS-Signal überlagert ist, genau diesem Signal folgt, was bei der bekannten Lösung mittels analoger Signalaufbereitung nicht erreicht ist. Ferner können auch viele aufeinanderfolgende Nullen oder Einsen richtig erkannt werden.

Die Erfindung wird nun anhand der Figuren der Zeichnung näher erläutert.

Figur 1 zeigt in Form eines Blockschaltbildes ein bevorzugtes Ausführungsbeispiel der Erfindung,

Figur 2 zeigt ausschnittsweise eine eingangsseitige Variante mit Ersatz des Addierers durch eine Multiplizierstufe ;

Figur 3 zeigt eine weitere Variante mit Ersatz des Multiplizierers durch einen Betragsbildner,

Figur 4 zeigt eine weitere mögliche Variante mitels eines hinter dem Ausgang des zweiten Subtrahierers eingefügten digitalen Begrenzers und

Figur 5 eine Weiterbildung der Erfindung.

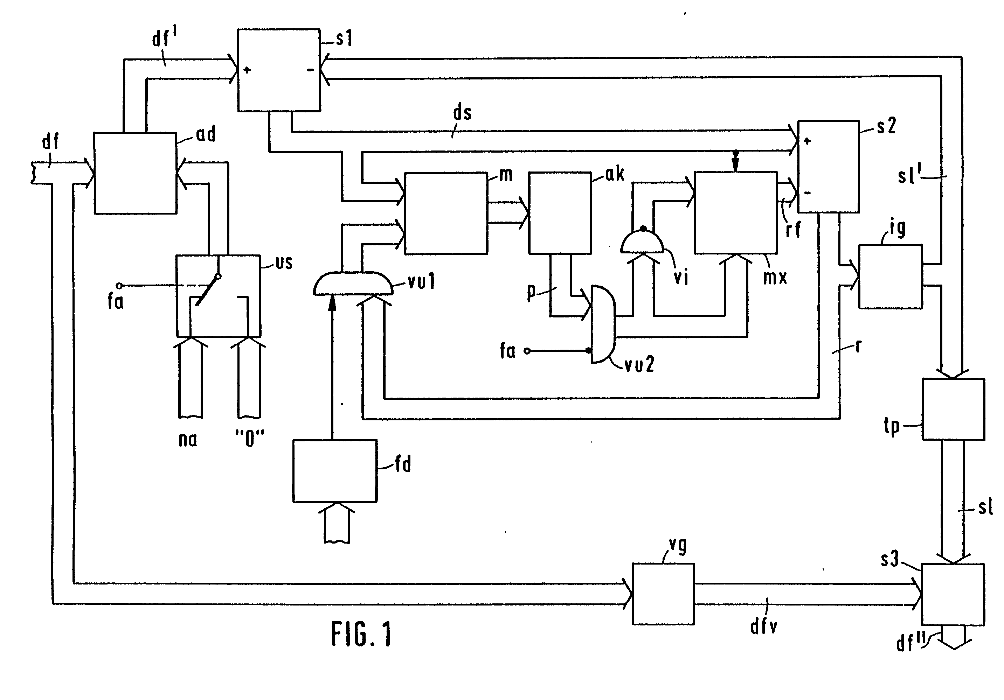

Das in Figur 1 gezeigte bevorzugte Ausführungsbeispiel der Erfindung setzt voraus, daß das FBAS-Signal bereits in digitaler Form als digitales FBAS-Signal df vorliegt, wie dies in Fernsehempfängern mit digitaler Signalverarbeitung üblich ist. Die bandförmigen Verbindungsleitungen zwischen den einzelnen Teilschaltungen zeigen, daß die Daten-Slicer-Schaltung zur parallelen Signalverarbeitung des digitalen FBAS-Signals df vorgesehen ist. Die verwendeten Teilschaltungen sind somit entsprechende « Parallel »-Teilschaltungen, also insbesondere Parallel-Addierer, -Subtrahierer und -Multiplizierer.

Das digitale FBAS-Signal df ist dem ersten Eingang des Addierers ad und dem Eingang des Verzögerungsglieds vg zugeführt. Der Ausgang des Addierers ad liegt am Minuend-Eingang des ersten Subtrahierers s1 und sein zweiter Eingang am Ausgang des Vielfachumschalters us. Dessen Steuereingang sind die Auftastimpulse fa zugeführt, die für die Zwecke der Beschreibung während der Dauer von Horizontal- und Farbsynchronimpulsen den positiveren H-Pegel zweier Binär-Signalpegel H, L haben sollen. Die in Figur 1 gezeigte Schalterstellung des Vielfachumschalters us ist die während dieser aktiven Phase der Auftastimpulse fa auftretende.

Dem ersten Eingang des Vielfachumschalters us ist der digitale rechnerische Norm-Amplituden-Mittelwert na der Teletextsignale zugeführt. Nach Bild 11 auf Seite 882 von « Funkschau », 1977 ist damit derjenige Zahlenwert gemeint, der in der Mitte zwischen den beiden dort mit Binär « 0 » und Binär « 1 » bezeichneten Pegeln liegt. Wenn der Schwarzpegel zu 0 % und der Weißpegel zu 100 % des Luminanzsignals definiert werden, so liegen die beiden Teletextpegel bei 0 % bzw. 66 %. Am zweiten Eingang des Vielfachumschalters us liegt ein dem Zahlenwert null entsprechendes Signal « 0 ». Somit wird während der Auftastimpulse fa dem digitalen FBAS-Signal df mittels des Addierers ad der erwähnte Norm-Amplituden-Mittelwert na digital hinzuaddiert, und während der übrigen Zeiten einer Bildzeile gelangt das digitale FBAS-Signale df unverändert an den Minuend-Eingang des ersten Subtrahierers s1. Durch diese Teilmaßnahme der Erfindung wird zu Beginn jeder Bildzeile ein dem optimalen Schwellwert (slicing level) nahekommender Schwellwert vorgegeben, so daß Takteinlauf und Fangcode sicher und richtig erkannt werden können. Am Minuend-Eingang des ersten Subtrahierers lieg also das startwert-behaftete FBAS-Signal df'.

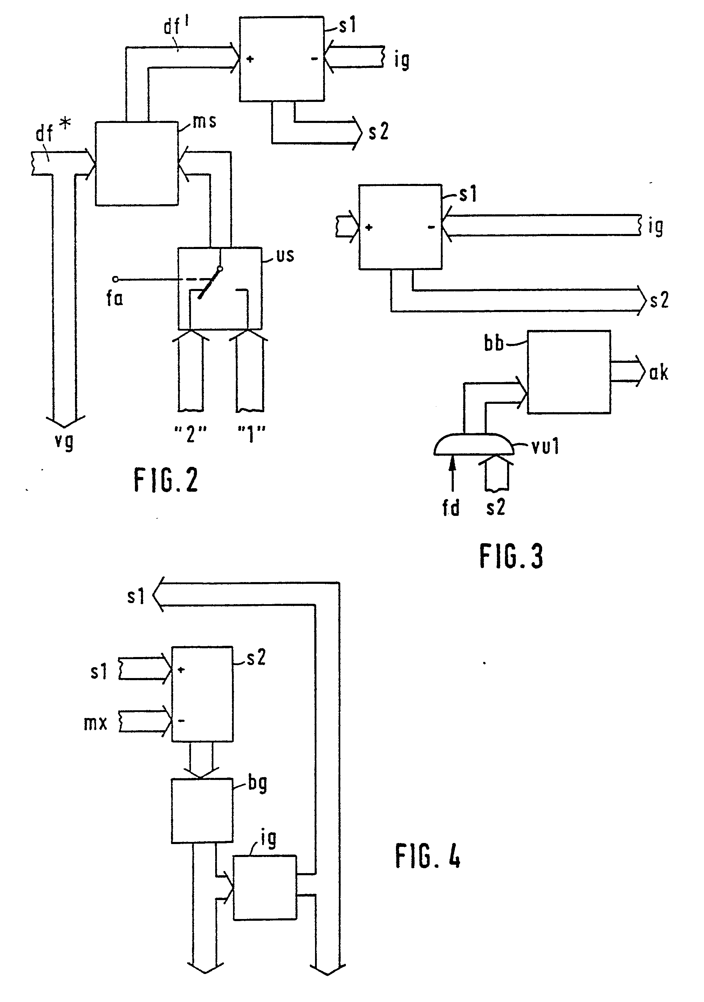

Nach der in Figur 2 gezeigten Variante kann anstelle des Addierers ad die Multiplizierstufe ms vorgesehen werden, wobei dann dem ersten Eingang des Vielfachumschalters us ein dem dezimalen Zahlenwert 2 entsprechendes Signal « 2 » und seinem zweiten Eingang ein dem Zahlenwert 1 entsprechendes Signal « 1 » zugeführt ist. Während der aktiven Phase der Auftastimpulse fa wird somit bei dieser Variante das digitale FBAS-Signal df mittels der Multiplizierstufe ms auf das Doppelte vergrößert, was ebenfalls die sichere Erkennung von Takteinlauf und Fangcode ermöglicht. Außerdem muß in diesem Falle das dem ersten Eingang der Multiplizierstufe ms zugeführte digitale FBAS-Signal ein solches Signal df* mit dem Schwarzwert als 25 %-Pegel sein.

In Figur 1 liegt der Ausgang des ersten Subtrahierers s1 am Minuend-Eingang des zweiten Subtrahierers s2 und am ersten Eingang des Multiplizierers m, dessen Ausgang mit dem Eingang des digitalen Akkumulators ak und dessen zweiter Eingang mit dem Ausgang des ersten Vielfach-UND-Gatters vu1 verbunden ist, an dessen erstem Eingang der Ausgang des Fangcodedetektors fd liegt.

Der Ausgang des Akkumulators ak liegt am ersten Eingang des zweiten Vielfach-UND-Gatters vu2, dessen invertierendem zweiten Eingang die Auftastimpulse fa zugeführt sind und dessen Ausgang zum einen direkt und zum anderen über den Vielfachinverter vi mit jeweils einem Eingang des Multiplexers mx verbunden ist. Der Ausgang des Multiplexers mx liegt am Subtrahend-Eingang des zweiten Subtrahierers s2, und sein Steuereingang ist mit der die Vorzeichen-Stelle führenden Ausgangsleitung des ersten Subtrahierers s1 verbunden.

Mittels der Teilschaltungen m, ak, mx, vi und vu1 wird die Amplitude des im digitalen FBAS-Signal enthaltenen Teletextsignals unter der für eine gegebene Empfangssituation meist zutreffenden Voraussetzung ermittelt, daß die Teletextsignal-Amplitude nur sehr langsam sich ändert. Mittels dem dem einen Eingang des ersten Vielfach-UND-Gatters vu1 zugeführten Ausgangssignal des Fangcodedetektors fd wird erreicht, daß diese Amplitudenmessung nur in solchen Bildzeilen auftritt, die Teletextsignale enthalten.

Dem Ausgang des zweiten Subtrahierers s2 ist das digitale Integrierglied ig nachgeschaltet, dessen Ausgang am Subtrahend-Eingang des ersten Subtrahierers s1 und über den digitalen Tiefpaß am Substrahend-Eingang des dritten Subtrahierers s3 liegt. Dessen Minuend-Eingang ist mit dem Ausgang des Verzögerungsglieds vg verbunden, und an seinem Ausgang ist das mit dem Schwellwert überlagerte digitale FBAS-Signal df″ abnehmbar. Die Verzögerungszeit des Verzögerungsglieds vg ist gleich der Laufzeit des digitalen Tiefpasses tp zu wählen.

Die Figur 3 zeigt ausschnittsweise denjenigen Schaltungsteil von Figur 1, der die Teilschaltungen s1, m und vu1 dort enthält, allerdings in Figur 3 mit der Abwandlung, daß der Multiplizierer m nach Figur 1 durch den Betragsbildner bb ersetzt ist, wobei die in Figur 1 vorhandene Verbindung zum Ausgang des ersten Subtrahierers s1 entfällt. Der Betragsbildner bb liefert ein Ausgangssignal, das bei negativen Eingangssignalen das zahlenwertentsprechende positive Signal ist.

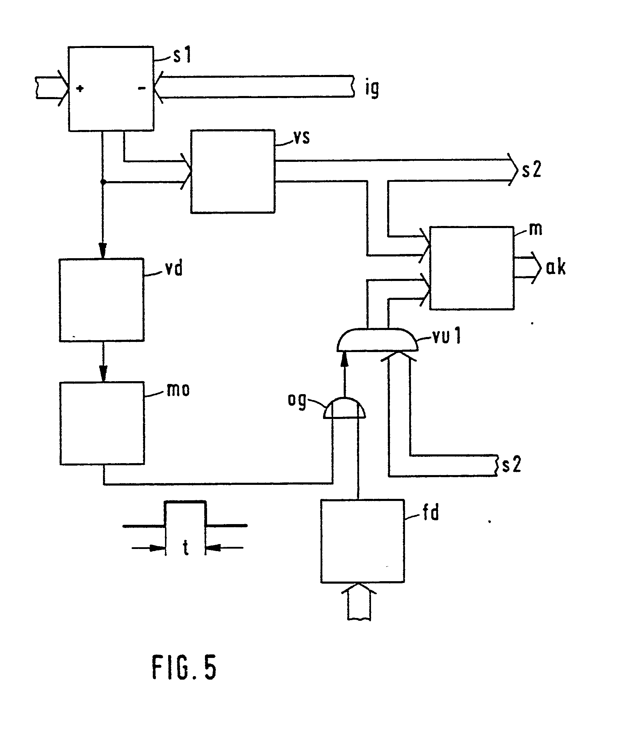

Die Figur 4 zeigt schließlich eine weitere Variante der Erfindung, die darin besteht, daß zwischen dem Ausgang des zweiten Subtrahierers s2 und dem Eingang des Integrierglieds ig und dem des ersten Vielfach-UND-Gatters vu1 der digitale Begrenzer bg eingefügt ist, dessen positiver bzw. negativer Begrenzungswert zu einem Bruchteil des maximalen Ausgangssignalwertes des Akkumulators ak zu wählen ist.

Zur weiteren Funktionserläuterung der Erfindung wird auf die in den Figuren zusätzlich zu den bereits erwähnten Bezugzeichen ferner eingetragenen Bezugzeichen für Signale zurückgegriffen. Der Schwellwert sl wird dadurch ermittelt, daß, allgemein gesprochen, vom digitalen FBAS-Signal df das Teletextsignal subtrahiert wird. Da jedoch die genaue Signalform des Teletextsignals unbekannt oder nicht reproduzierbar ist, wird das Referenzsignal rf als ein Rechtecksignal mit der Amplitude p des Ausgangssignals des Akkumulators ak erzeugt. Das Ergebnis der erwähnten Subtraktion ist am Ausgang des zweiten Subtrahierers s2 das Fehlersignal r.

Die Teilschaltung aus dem ersten und dem zweiten Subtrahierer s1, s2 sowie dem Integrierglied ig stellt, wenn das Referenzsignal rf gleich null ist, für das Signal df′ ein rekursives Tiefpaßfilter dar mit dem Ausgangssignal sl′ am Ausgang des Integrierglieds ig. Das Signal sl′ sollte möglichst alle Frequenzanteile eines dem digitalen FBAS-Signal df überlagerten Störsignals enthalten. Dies führt zu der Forderung, daß die Zeitkonstante des Integrierglieds ig möglichst groß sein soll. Andererseits enthält das Fehlersignal r hochfrequente Störsignalanteile, die durch die gewählte Rechteckform des Referenzsignals rf bedingt sind und ferner darauf zurückzuführen sind, daß sich das Fehlersignal r im Rhythmus der Teletextdaten ändert. Dieser Anteil des Fehlersignals r sollte möglichst gut unterdrückt werden, damit der Schwellwert sl von den übertragenen Teletextdaten unabhängig ist. Das führt zu der Forderung, daß die Zeitkonstante des Integrierglieds möglichst klein sein soll. Es sind also zwei widersprüchliche Forderungen bezüglich dieser Zeitkonstante zu erfüllen.

Die Erfindung erfüllt diese beiden Forderungen durch zwei alternative Maßnahmen, nämlich zum einen durch Einsatz des digitalen Tiefpaßfilters tp und zum anderen dadurch, daß entweder anstatt des Tiefpaßfilters tp oder zusätzlich zu ihm der Begrenzer bg vorgesehen wird. Mit dem Tiefpaßfilter tp werden die im Ausgangssignal sl′ des Integrierglieds ig noch vorhandenen datenabhängigen Störanteile unterdrückt, wobei die durch die Laufzeit des Tiefpaßfilters tp entstehende Signalverzögerung mittels des Verzögerungsglieds vg so kompensiert wird, daß des Schwellwert sl genau dem verzögerten digitalen FBAS-Signal dfv folgt.

Wird der Begrenzer bg vorgesehen, so wird die maximale Steilheit, mit der die Schaltung einem Störsignal folgen kann, zwar reduziert, damit werden aber auch die datenabhängigen Störsignale vermindert.

Somit ergibt sich durch die erfindungsgemäße Schaltung eine Nachführung des Schwellwerts sl, die insbesondere dann wichtig ist, wenn das den Teletextsignalen überlagerte Störsignal eine Frequenz hat, die deutlich unterhalb der übertragenen Datenrate liegt.

Mit der Weiterbildung nach Fig. 5 kann die Erfindung noch weiter verbessert werden. Bei den bisher erläuterten Varianten der Erfindung wird nämlich mittels des Akkumulators ak, des Multiplexers mx, des zweiten Vielfach-UND-Gatters vu2 und des Vielfach-Inverters vi am Ausgang des Akkumulators ak ungefähr ein einem Effektivwert vergleichbarer Amplitudenwert p des Ausgangssignals ds ermittelt, was sich daraus ergibt, daß die Null-Eins-Wechsel des Teletextsignals wenig steilflankig, also verschliffen, sind, und der somit von der tatsächlichen Anzahl aufeinanderfolgender Einsen bzw. Nullen abhängt. Der tatsächliche Amplitudenwert des Ausgangssignals ds ergibt sich, wenn zwischen dem Ausgang des ersten Subtrahierers s1 einerseits und dem Minuend-Eingang des zweiten Subtrahierers s2 sowie dem einen Eingang des Multiplizierers m andererseits die Verzögerungsstufe vs liegt, wenn ferner die die Vorzeichenstelle führende Ausgangsleitung des ersten Subtrahierers s1 am Eingang des Vorzeichenwechsel-Detektors vd liegt, dessen Ausgang ein digitales Monoflop mv ansteuert, wenn ferner zwischen dem Ausgang des Fangcode-Detektors fd und dem einen Eingang des ersten Vielfach-UND-Gatters vu1 das ODER-Gatter og liegt, dessen anderer Eingang am Ausgang des Monoflops mo angeschlossen ist, und wenn schließlich die Verzögerungszeit der Verzögerungsstufe vs halb so groß wie die Dauer t des Ausgangsimpulses des Monoflops mo ist.

Durch diese Weiterbildung wird erreicht, daß die Amplitudenmessung kurz vor und kurz nach einem Null-Eins-Wechsel unterdrückt wird, so daß nur die Spitzenwerte des Teletextsignals digital ausgewertet werden. Diese Weiterbildung greift also auf den in der eingangs genannten Durchschrift enthaltenen Gedanken der Spitzenwertauswertung, die dort allerdings eine übliche analoge Spitzenwertgleichrichtung ist, zurück, realisiert diesen Gedanken jedoch mit digitalen Mitteln.

Die Dauer t des Monoflop-Ausgangsimpulses liegt bei etwa 100 ns.

## Patentansprüche

1. Daten-Slicer-Schaltung zur Abtrennung und Wiedergewinnung von digitalen Teletextsignalen aus dem in Farbfernsehempfängern demodulierten FBAS-Signal mittels eines aus den Teletextsignalen abgeleiteten Schwellwerts (slicing level) (sl) unter Verwendung eines Fangcode-Detektors (fd) und eines Auftastimpulses (fa), dessen aktive Phase mindestens während der Dauer von Horizontal- und Farbsynchronimpulsen auftritt, gekennzeichnet durch folgende Merkmale:

die Daten-Slicer-Schaltung ist zur parallelen Signalverarbeitung eines digitalen FBAS-Signals (df; Fig. 1) ausgelegt,

dieses ist einem Verzögerungsglied (vg) und dem ersten Eingang eines Addierers (ad) zugeführt, dessen Ausgang am Minuend-Eingang eines ersten Subtrahierers (s1) und dessen zweiter Eingang am Ausgang eines Vielfachumschalters (us) liegt, dessen Steuereingang die Auftastimpulse (fa) zugeführt sind,

dem ersten Eingang des Vielfachumschalters (us) ist der digitale rechnerische Norm-Amplituden-Mittelwert (na) der Teletextsignale zugeführt und an dessen zweitem Eingang liegt ein dem Zahlenwert null entsprechendes Signal (« 0 »),

der Ausgang des ersten Subtrahierers (s1) liegt am Minuend-Eingang eines zweiten Subtrahierers (s2) und am ersten Eingang eines Multiplizierers (m), dessen Ausgang mit dem Eingang eines digitalen Akkumulators (ak) und dessen zweiter Eingang mit dem Ausgang eines ersten Vielfach-UND-Gatters (vu1) verbunden ist, an dessen erstem Eingang der Ausgang des Fangcode-Detektors (fd) liegt,

der Ausgang des Akkumulators (ak) liegt am ersten Eingang eines zweiten Vielfach-UND-Gatters (vu2), dessen invertierendem zweiten Eingang die Auftastimpulse (fa) zugeführt sind und dessen Ausgang zum einen direkt und zum anderen über einen Vielfachinverter (vi) mit jeweils einem Eingang eines Multiplexers (mx) verbunden ist, dessen Ausgang am Subtrahend-Eingang des zweiten Subtrahierers (s2) liegt und dessen Steuereingang mit der die Vorzeichenstelle führenden Ausgangsleitung des ersten Subtrahierers (s1) verbunden ist,

dem Ausgang des zweiten Subtrahierers (s2) ist ein digitales Integrierglied (ig) nachgeschaltet, dessen Ausgang am Subtrahend-Eingang des ersten Subtrahierers (s1) und über einen digitalen Tiefpaß (tp) am Subtrahend-Eingang eines dritten Subtrahierers (s3) liegt, dessen Minuend-Eingang mit dem Ausgang des Verzögerungsglieds (vg) verbunden ist und an dessen Ausgang das mit dem Schwellwert überlagerte digitale FBAS-Signal (df) ansteht, und

die Verzögerungszeit des Verzögerungsglieds (vg) ist gleich der Laufzeit des digitalen Tiefpasses (tp).

2. Daten-Slicer-Schaltung nach Anspruch 1, dadurch gekennzeichnet, daß zwischen dem Ausgang des zweiten Subtrahierers (s2) und dem Eingang des Integrierglieds (ig) und dem des ersten Vielfach-UND-Gatters (vu1) ein digitaler Begrenzer (bg; Fig. 4) eingefügt ist, dessen positiver bzw. negativer Begrenzungswert zu einem Bruchteil des maximalen Ausgangssignalwerts des Akkumulators (ak) gewählt ist.

3. Daten-Slicer-Schaltung nach Anspruch 1 oder 2, dadurch gekennzeichnet, daß der Multiplizierer (m) durch einen lediglich mit dem Ausgangssignal des ersten Vielfach-UND-Gatters (vu1) eingangsseitig gespeisten Betragsbildner (bb) ersetzt ist.

4. Daten-Slicer-Schaltung nach einem der Ansprüche 1 bis 3, dadurch gekennzeichnet, daß der Addierer (ad) durch eine Multiplizierstufe (ms ; Fig. 2) ersetzt ist, daß dann dem ersten Eingang des Vielfachumschalters (us) ein dem dezimalen Zahlenwert zwei entsprechendes Signal (« 2 ») und dessem zweiten Eingang ein dem Zahlenwert eins entsprechendes Signal (« 1 ») zugeführt ist und daß dann das dem ersten Eingang der Multiplizierstufe (ms) zugeführte digitale FBAS-Signal ein solches (df*) mit dem Schwarzwert als 25 %-Pegel ist.

5. Daten-Slicer-Schaltung nach einem der Ansprüche 1 bis 4, gekennzeichnet durch folgende Merkmale :

zwischen dem Ausgang des ersten Subtrahierers (s1) einerseits und dem Minuend-Eingang des zweiten Subtrahierers (s2) sowie dem einen Eingang des Multiplizierers (m) andererseits liegt eine Vorzögerungsstufe (vs ; Fig. 5),

die die Vorzeichenstelle führende Ausgangsleitung des ersten Subtrahierers (s1) liegt am Eingang eines Vorzeichenwechsel-Detektors (vd), dessen Ausgang ein digitales Monoflop (mo) ansteuert,

zwischen dem Ausgang des Fangcode-Detektors (fd) und dem einen Eingang des ersten Vielfach-UND-Gatters (vu1) liegt ein ODER-Gatter (og), dessen anderer Eingang am Ausgang des Monoflops (mo) angeschlossen ist, und

die Verzögerungszeit der Verzögerungsstufe (vs) ist halb so groß wie die Dauer (t) des Ausgangsimpulses des Monoflops (mo).

## Claims

1. Data slicer circuit for separating and recovering digital teletext signals from the composite color signal demodulated in color-television receivers wherein a slicing level (sl) is derived from the teletext signals with the aid of a framing-code detector (fd) and a gating pulse (fa) whose active phase is present at least for the duration of horizontal- and color-sync pulses, characterized by the following features :

the data slicer circuit is designed to process a digital composite color signal (df) in parallel ;

the digital composite color signal (df ; Fig. 1) is applied to a delay element (vg) and to the first input of an adder (ad) whose output is connected to the minuend input of a first subtracter (s1), and whose second input is connected to the output of a multiposition switch (us) to whose control input the gating pulses (fa) are applied ;

the first input of the multiposition switch (us) is presented with the digital arithmetic mean (na) of the standard amplitudes of the teletext signals, and the second input with a signal (« 0 ») corresponding to the numerical value zero ;

the output of the first subtracter (s1) is connected to the minuend input of a second subtracter (s2) and to the first input of a multiplier (m) whose output is connected to the input of a digital accumulator (ak), and whose second input is connected to the output of a first multiple AND gate (vu1) having its first input connected to the output of the framing-code detector (fd) ;

the output of the accumulator (ak) is connected to the first input of a second multiple AND gate (vu2) whose inverting second input is presented with the gating pulses (fa), and whose output is connected directly and through a multiple inverter (vi) respectively, to two inputs of a multiplexer (mx) whose output is connected to the subtrahend input of the second subtracter (s2), and whose control input is connected to the sign-digit-carrying output line of the first subtracter (s1) ;

the second subtracter (s2) is followed by a digital integrator (ig) whose output is connected to the subtrahend input of the first subtracter (s1) and, through a digital low-pass filter (tp), to the subtrahend input of a third subtracter (s3) whose minuend input is connected to the output of the delay element (vg), and whose output provides the digital composite color signal (df) having the slicing level superimposed thereon, and

the delay produced by the delay element (vg) is equal to the delay introduced by the digital low-pass filter (tp).

2. A data slicer circuit as claimed in claim 1, characterized in that a digital limiter (bg ; Fig. 4) whose positive and negative limiting values are chosen to be equal to a fraction of the maximum output-signal value of the accumulator (ak) is inserted between the output of the second subtracter (s2) and the inputs of the integrator (ig) and the first multiple AND gate (vu1).

3. A data slicer circuit as claimed in claim 1 or 2, characterized in that the multiplier (m) is replaced by a magnitude stage (bb) which is supplied only with the output signal of the first multiple AND gate (vu1).

4. A data slicer circuit as claimed in any one of claims 1 to 3, characterized in that the adder (ad) is replaced by a multiplier stage (ms ; Fig. 2) that the first input of the multiposition switch (us) is presented with a signal (« 2 ») corresponding to the decimal numerical value two, and the second input with a signal (« 1 ») corresponding to the numerical value one, and that the digital composite color signal applied to the first input of the multiplier stage (ms) is such a signal (df*) with a black level at 25 % of the maximum picture brightness.

5. A data slicer circuit as claimed in any one of claims 1 to 4, characterized by the following features :

between the output of the first subtracter (s1), on the one hand, and the minuend input of the second subtracter (s2) and the first input of the multiplier (m), on the other hand, a delay stage (vs ; Fig. 5) is located ;

the sign-digit-carrying output line of the first subtracter (s1) is connected to the input of a sign-reversal detector (vd) whose output controls a digital monostable multivibrator (mo) ;

between the output of the framing-code detector (fd) and the first input of the first multiple AND gate (vu1), an OR gate (og) is located which has its other input connected to the output of the monostable multivibrator (mo), and

the delay produced by the delay stage (vs) is equal to half the duration (t) of the output pulse of the monostable multivibrator (mo).

## Revendications

1. Circuit séparateur de données pour séparer et recouvrer des signaux numériques de télétexte à partir du signal composite couleurs démodulé dans les récepteurs de télévision en couleurs dans lesquels un niveau de séparation (s1) est dérivé des signaux télétexte à l'aide d'un détecteur de code de trame (fd) et une impulsion de commutation (fa) dont la phase active est présente au moins durant les impulsions de synchronisation horizontale et de référence de couleurs, caractérisé en ce que :

le circuit séparateur de données est agencé pour traiter en parallèle un signal composite couleurs numérique (df, fig. 1) ;

le signal composite couleurs numérique (df) est appliqué à un circuit à retard (vg) et à la première entrée d'un additionneur (ad) dont la sortie est connectée à l'entrée de terme principal d'un premier soustracteur (s1) et dont la deuxième entrée est connectée à la sortie d'un commutateur à positions multiples (us) à l'entrée de commande duquel sont appliquées les impulsions de commutation (fa) ;

la première entrée du commutateur à positions multiples (us) reçoit la moyenne arithmétique numérique (na) des amplitudes normalisées des signaux télétexte, et sa deuxième entrée un signal (« 0 ») correspondant à la valeur numérique zéro ;

la sortie du premier soustracteur (s1) est connectée à l'entrée de terme principal d'un deuxième soustracteur (s2) et à la première entrée d'un multiplicateur (m) dont la sortie est connectée à l'entrée d'un accumulateur numérique (ak) et dont la deuxième entrée est connectée à la sortie d'une première porte ET multiple (vu1) ayant sa première entrée connectée à la sortie du détecteur de code de trame (fd) ;

la sortie de l'accumulateur (ak) est connectée à la première entrée d'une deuxième porte ET multiple (vu2) dont la deuxième entrée inverseuse reçoit les impulsions de commutation (fa) et dont la sortie est respectivement connectée, directement et par l'intermédiaire d'un inverseur multiple (vi), aux deux entrées d'un multiplicateur (mx) dont la sortie est connectée à l'entrée de terme à soustraire du deuxième soustracteur (s2) et dont l'entrée de commande est connectée à la ligne de sortie de valeur de signe du premier soustracteur (s1) ;

la sortie du deuxième soustracteur (s2) est connectée à un intégrateur numérique (ig) dont la sortie est connectée à l'entrée de terme à soustraire du premier soustracteur (s1) et, par un filtre passe-bas numérique (tp), à l'entrée de terme à soustraire d'un troisième soustracteur (s3) dont l'entrée de terme principal est connectée à la sortie de l'élément à retard (vg) et dont la sortie fournit le signal composite couleurs numérique (df) auquel est superposé le niveau de séparation, et

le retard apporté par l'élément à retard (vg) est égal au retard apporté par le filtre passe-bas numérique (tp).

2. Circuit séparateur de données conforme à la revendication 1, caractérisé en ce qu'un limiteur numérique (bg, fig. 4) dont les valeurs de limitation positive et négative sont choisies égales à une fraction de la valeur maximale du signal de sortie de l'accumulateur (ak) est inséré entre la sortie du deuxième soustracteur (s2) et l'entrée de l'intégrateur (ig) et celle de la première porte ET multiple (vu1).

3. Circuit séparateur conforme à la revendication 1 ou 2, caractérisé en ce que le multiplicateur (m) est remplacé par un étage d'amplitude (bb) qui est alimenté seulement par le signal de sortie de la première porte ET multiple (vu1).

4. Circuit séparateur de données selon l'une quelconque des revendications 1 à 3, caractérisé en ce que l'additionneur (ad) est remplacé par un étage multiplicateur (ms, fig. 2), en ce que la première entrée du commutateur à positions multiples (us) reçoit un signal (« 2 ») correspondant à la valeur numérique deux et sa deuxième entrée un signal (« 1 ») correspondant à la valeur numérique un, et en ce que le signal composite couleurs numérique appliqué à la première entrée de l'étage multiplicateur (ms) est un signal (df*) tel que le niveau du noir est un niveau de 25 %.

5. Circuit séparateur de données selon l'une quelconque des revendications 1 à 4, caractérisé en ce que :

un étage à retard (vs, fig. 5) est disposé entre, d'une part, la sortie du premier soustracteur (s1) et, d'autre part, l'entrée de terme principal du deuxième soustracteur (s2) et à la première entrée du multiplicateur (m) ;

la sortie de report de signe du premier soustracteur (s1) est connectée à l'entrée d'un détecteur d'inversion de signe (vd) dont la sortie commande un multivibrateur monostable numérique (mo) ;

entre l'entrée du détecteur de code de trame (fd) et la première entrée de la première porte ET multiple (vu1) est disposée une porte OU (og) dont l'autre entrée est connectée à la sortie du multivibrateur monostable (mo), et

le retard apporté par l'étage à retard (vs) est égal à la moitié de la durée (t) de l'impulsion de sortie du multivibrateur monostable (mo).

FIG.1

FIG.2

FIG.3

FIG. 4

FIG. 5